# EUROPEAN PATENT SPECIFICATION

(11) **EP 2 383 525 B1**
(45) Date of publication and mention of the grant of the patent: **27.11.2013**
(21) Application number: 11173696.3
(22) Date of filing: 04.06.2007
(51) Int. Cl.: F24F 5/00, F24J 3/08, F28D 1/02, F28D 15/00

(54) **Temperature equilibrating methodology & installation with water supply system**
Temperaturausgleichsverfahren und -installation mit einem Wasserversorgungssystem
Méthodologie d'équilibrage de température et installation dans un système d'alimentation en eau

(43) Date of publication of application: 02.11.2011
(62) Divisional of application: 07252249.3
(73) Proprietor: Yang, Tai-Her, Dzan-Hwa (TW)
(72) Inventor: Yang, Tai-Her, Dzan-Hwa (TW)
(74) Representative: Wright, Howard Hugh Burnby

(56) References cited:
- WO-A-03/012348
- DE-A1- 2 834 442
- DE-A1- 2 930 484
- JP-A- 2000 146 356
- US-A- 5 727 621
- US-A- 6 053 239

## Description

### BACKGROUND OF THE INVENTION

### (a) Field of the Invention

The present invention is related to a temperature equilibration apparatus, and more particularly, to the use of specific piping from a water supply system and the water running in the pipe as a carrier to conduct the thermal energy in the stratum to a subject matter on the ground.

### (b) Description of the Prior Art:

Whereas reliance upon air conditioning system in summer time in conventional buildings and upon electric power or fuel for heating purpose in winter time consume massive energy source. Furthermore, in bitter cold days, frozen water pipe of the conventional water supply system exposed or buried just beneath the surface of the earth, accumulation of snow on roof and frozen road are often blamed for causing disasters.

US 6053239 discloses a geothermal energy installation and system, in which the field of potable water is utilized by a secondary conduit system to route potable water from an inlet in the user's line coming from the potable water field but upstream of the user's meter, through the heat exchanger equipment of a user, and back to the field at a point upstream of the final treatment processing stage of the field. Thus, the thermal energy of the water of the field is utilized without adding the cost of the volume of potable water use by the user, and is re-processed if somehow contaminated in the secondary conduit systems.

### SUMMARY OF THE INVENTION

The primary purpose of the present invention is to provide a temperature equilibration apparatus to execute temperature equilibration thermal transmission between the thermal energy in the deeper stratum and a subject matter on the ground designated for transmission of thermal energy by a closed piping comprised of underground water pipe buried in the underground for a water supply system and a closed water pipe disposed on the ground to transmit the thermal energy in the stratum conducted by the underground pipe through the current running in the closed water pipe.

### BRIEF DESCRIPTION OF THE DRAWINGS

Fig. 1 is a schematic view showing a layout of a conventional water supply piping and a piping in a building.
Fig. 2 is a schematic view of the present invention showing that the system includes an auxiliary temperature equilibration piping disposed in parallel to the present invention so to perform open fluid temperature equilibration circulation to an open space.
Fig. 3 is a schematic view of another preferred embodiment of the present invention showing that the water supply system is disposed with an auxiliary temperature equilibration piping in parallel to the present invention so to perform open fluid circulation to the interior space in a building or other closed or semi-closed structure.

### DETAILED DESCRIPTION OF THE PREFERRED EMBODIMENTS

The present invention for temperature equilibration by means of a water supply system operates on having an underground water pipe of the conventional water supply system buried in the stratum and water running in the pipe as carriers to be incorporated with a flow passage comprised of a closed water pipe constructed on the ground, a temperature equilibrating object, and a pump. Whereas it is a well-known fact that the stratum 4~6 meters below the surface of the earth maintains a normal temperature range between 12~16 °C all year round, the current pumped by the pump, or the circulating current resulted from the convection effect due to temperature difference when the hotter water runs to the cooler water and vice versa, or the current resulted from shunting effect, functions in the present invention as a carrier of thermal energy to execute thermal transmission of temperature equilibration between the thermal energy in the stratum and a subject matter on ground to receive the thermal energy transmission, thus to replace or support the conventional air conditioning system that consumes massive energy and further to save energy.

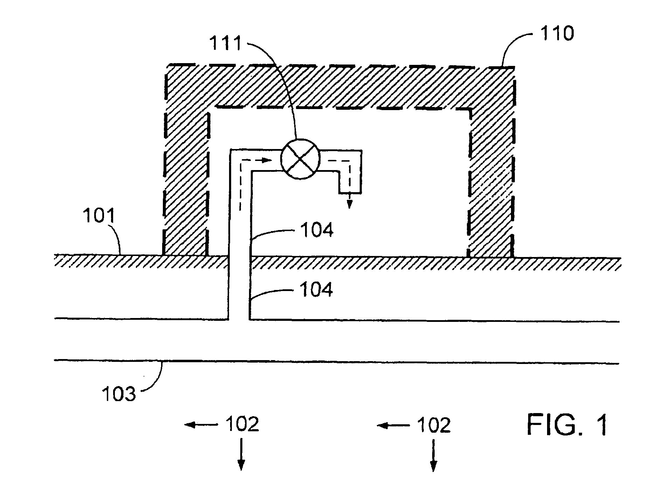

Referring to Fig. 1 for a layout of a conventional water supply piping and a piping of a building, wherein,
---101 relates to the surface of the earth;
---102 relates to a deeper stratum where the normal temperature maintains within the range of 12~16 °C;
---103 relates to an underground water pipe of a conventional water supply system buried in the deeper stratum 102;
---104 relates to a water supply branch to be connected to where between a water valve 111 at the subscriber's and the underground water pipe 103 to deliver water from the water supply system to the subscriber; and
---111 relates to the water valve at the subscriber's building 110 that serves as a flow switch to fetch the water at random.

Within the layout as described above, the following problems often take place in bitter cold winter:
(1) The water inside the conventional water supply branch 104 that is closer to the surface of the earth 101 or that is exposed from the surface of the earth 101 is vulnerable to get frozen in bitter cold winter thus to block the current; and
(2) The roof of the building is sometimes threatened by collapse due to the weight and pressure imposed by accumulated snow or ice thereon.

The temperature equilibrating methodology and installation by means of the water supply system of the present invention is innovative to provide closed water pipe in a building for the thermal energy in the stratum absorbed by the underground water pipe buried in the stratum to execute thermal transmission of thermal equilibration to the perimeters of the closed water pipe or the temperature equilibration installation in the building through a flow passage created by the thermal equilibration installation, fluid pump and the underground water pipe buried in the stratum with the circulation current as the carrier.

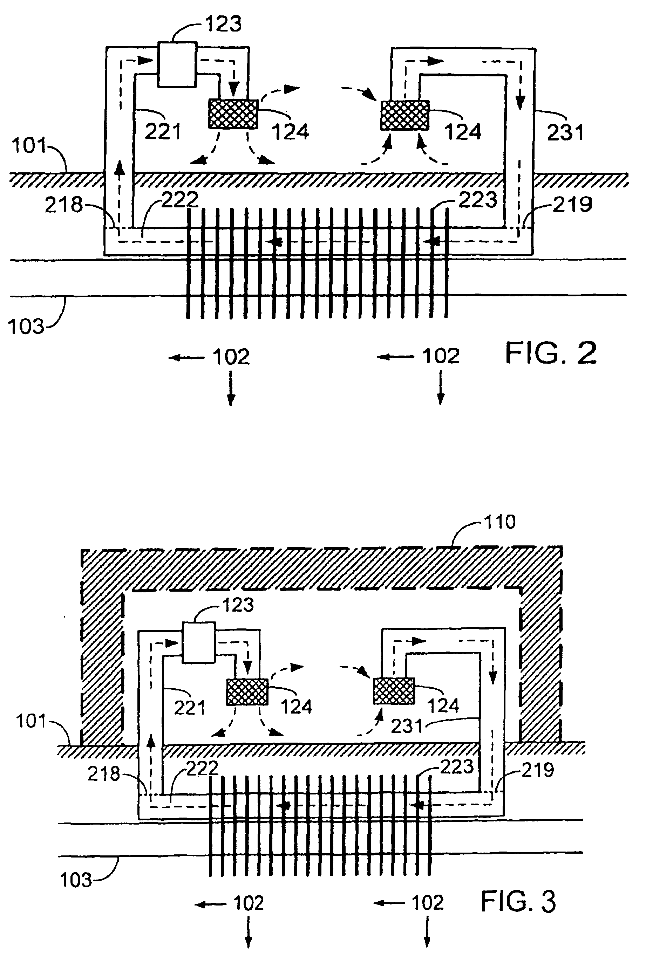

Fig. 2 shows a schematic view of another preferred embodiment yet of the present invention, wherein the system includes an auxiliary temperature equilibration piping disposed in parallel to the present invention so to perform open fluid temperature equilibration circulation to an open space.

The system includes one or a plurality of an auxiliary temperature equilibration piping 222 disposed in parallel with and to the perimeter of a certain section of the underground water pipe 103 of the water supply system that is capable of executing transmission of thermal energy mutually with the underground water pipe 103 of the water supply system, and both may be made to share the same construction or interlocked to each other if and when necessarily to facilitate the transmission of thermal energy; or alternatively, a wing shape structure 223 or any other heat conduction structure or heat pipe device may be disposed at where between the water supply system and the auxiliary temperature equilibration piping 222 so to indirectly perform the indirect transmission of thermal energy between the water current inside the underground piping 103 of the water supply system, and the fluid flowing through the auxiliary temperature equilibration piping 222. One or a plurality fluid inlet 218 and a fluid piping 221 leading to the open space are disposed to one end of the auxiliary temperature equilibration piping 222; and one or a plurality of fluid outlet 219 and a fluid piping 231 leading to the open space are disposed to the other end of the auxiliary temperature equilibration piping 222 for the gaseous or liquid state fluid to flow in and out. The fluid may perform convection circulation by the effects that the cooler descends and the hotter ascends, or driven by a motor with the installation of a liquid pump 123, or driven by other mechanical kinetics or by manual so to pump the fluid passing through the auxiliary temperature equilibration piping 222 into the fluid piping 221 to the open space. The fluid then flows through the fluid piping 231 back to the auxiliary temperature equilibration piping 222 so to indirectly perform the temperature equilibration transmission of indirect conduction of thermal energy between the water supply system and the open space. The fluid piping 221 and another fluid piping 231 are respectively leading to the open space to perform the open fluid circulation; and the optional filtration device 124 may be each disposed to the fluid inlet and outlet of the fluid piping 221 and another fluid piping 231.

Fig. 3 shows a schematic view of another preferred embodiment yet of the present invention, wherein the water supply system is disposed with an auxiliary temperature equilibration piping in parallel to the present invention so to perform open fluid circulation to the interior space in a building or other closed or semi-closed structure.

One or a plurality of auxiliary temperature equilibration piping 222 is disposed in parallel with and to the perimeter of a certain section of the underground water pipe 103 of the water supply system. The auxiliary temperature equilibration piping 222 is capable of executing transmission of thermal energy mutually with the underground water pipe 103 of the water supply system, and both may be made to share the same construction or interlocked to each other if and when necessarily to facilitate the transmission of thermal energy; or alternatively, a wing shape structure 223 or any other heat conduction structure or heat pipe device may be disposed at where between the water supply system and the auxiliary temperature equilibration piping 222 so to indirectly perform the indirect transmission of thermal energy between the water current inside the underground piping 103 of the water supply system and the fluid flowing though the auxiliary temperature equilibration piping 222. One or a plurality fluid inlet 218 and a fluid piping 221 leading to the interior space in the building 110 or other closed or semi-closed structure are disposed to one end of the auxiliary temperature equilibration piping 222; and one or a plurality of fluid outlet 219 and a fluid piping 231 leading to the interior space in the building 110 or a closed or semi-closed structure are disposed to the other end of the auxiliary temperature equilibration piping 222 for the gaseous or liquid state fluid to flow in and out. The fluid may perform convection circulation by the effects that the cooler descends and the hotter ascends, or driven by a motor with the installation of a liquid pump 123, or driven by other mechanical kinetics or by manual so to pump the fluid passing through the auxiliary temperature equilibration piping 222 into the fluid piping 221 to the interior space in the building 110 or other closed or semi-closed structure. The fluid flows through the fluid piping 231 back to the auxiliary temperature equilibration piping 222 so to indirectly perform the temperature equilibration transmission of indirect conduction of thermal energy between the water supply system and the interior space in the building 110 or a closed or semi-closed structure. The fluid piping 221 and another fluid piping 231 are respectively leading to the interior space in the building 110 or other closed or semi-closed structure to perform the open fluid circulation; and the optional filtration device 124 may be each disposed to the fluid inlet and outlet of the fluid piping 221 and another fluid piping 231.

The subject matter for the temperature equilibration operation performed by the methodology and installation of temperature equilibration with a water supply system of the present invention includes:
(1) Various types of open space; or
(2) Open space on the surface of earth; or
(3) Shallow stratum; or
(4) Interior space of a semi-closed or closed building; or
(5) Interior space of other semi-closed or closed structure.

The building referred in these preferred embodiments described above for the methodology and installation of temperature equilibration with a water supply system of the present invention includes house, warehouse, or any building in column or any other geometric form, or any other designated building comprised of a semi-closed or closed structure designed as desired. Other functioning for the general house to live in, the interior space may be further operated to accommodate:
(1) Tooling machine, test and inspection instruments, observation instruments, industrial facilities, mechanical facilities, power machineries, and electro-mechanical facilities that demands specific working temperature; or
(2) Cooling installations, electricity storage installations; or
(3) Storage of solid, liquid, or gaseous state chemicals.

With the present invention, the natural thermal energy from the water supply system either cools or maintains the installations and facilities in a certain range of temperature.

Accordingly, the methodology and installation of temperature equilibration with a water supply system of the present invention by operating on the natural thermal energy (ranging between 12~16 °C) in the stratum absorbed by the underground water pipe of an existing water supply system to have current as a carrier to flow through a closed water pipe disposed at where closer to the surface of the earth, exposed from the ground or in a building to execute heat transmission of temperature equilibration to offer lower cost, summary work, and precise function; therefore, this application for a patent is duly filed.

## Claims

1. A temperature equilibration apparatus for heat transfer with a water supply system having an underground water pipe, comprising:
---auxiliary temperature equilibration piping (222) disposed in parallel to the underground water pipe (103)
---a wing shape structure (223) disposed about or between the auxiliary temperature equilibration piping (222) and the underground water pipe (103) for the transmission of thermal energy between the water current inside the underground water pipe (103) and the fluid within auxiliary temperature equilibration piping (222),
--- a liquid pump (123), the temperature equilibration apparatus **characterized by**
--- a fluid inlet (218) and fluid piping (221) disposed at one end of the auxiliary temperature equilibration piping (222), and leading to an open space;
--- a fluid outlet (219) and fluid piping (231) disposed at the other end of the auxiliary temperature equilibration piping (222), and leading to the open space; and
the fluid piping (221) and (231) are designed to form an open fluid circuit, such that, driven by the pump (123), the fluid passes through the auxiliary temperature equilibration piping (222) into piping (221) and into the open space, then back through piping (231) to the auxiliary temperature equilibration piping (222).

2. The temperature equilibration apparatus of claim 1, wherein fluid piping (221) and fluid piping (231) are disposed inside a closed or semi closed structure or building (110).

3. The temperature equilibration apparatus of claims 1 or 2, wherein, an auxiliary temperature equilibration piping is included in the temperature equilibration apparatus with a water supply system of the present invention to be disposed in parallel and allowing mutual transmission of thermal energy with the ground or the underground water supply piping; the auxiliary temperature equilibration piping is provided also to allow another type of gaseous or liquid state fluid passing through the piping to the subject matter to indirectly perform the temperature equilibration transmission with the subject matter by utilizing the thermal energy carried by the water current inside the water supply piping of the underground water supply system.

4. The temperature equilibration apparatus of any one of the preceding claims, wherein, the subject matter for the temperature equilibration operation performed by the temperature equilibration apparatus with a water supply system of the present invention includes:
(1) various types of open space; or
(2) open space on the surface of earth; or
(3) shallow stratum; or
(4) interior space of a semi-closed; or
(5) closed building or interior space of other semi-closed or closed structure.

5. The temperature equilibration apparatus ofclaim 2, 3 or 4, wherein the interior space of the building may be further operated to accommodate:
(1) industrial facilities, mechanical facilities, power machineries, and electro-mechanical facilities that demands specific working temperature; or
(2) cooling installations, electricity storage installations; or
(3) storage of solid, liquid, or gaseous state chemicals;
with the present invention, the natural thermal energy from the water supply system either cools or maintains the installations and facilities in a certain range of temperature.

6. The temperature equilibration apparatus of any one of the preceding claims, further comprising a filtration device 124 disposed to the fluid inlet and outlet of the fluid piping 221 and another fluid piping 231.

## Patentansprüche

1. Temperaturausgleichsgerät zur Wärmeübertragung mit einem Wasserversorgungssystem mit einer unterirdischen Wasserpumpe, umfassend
--- Hilfs-Temperaturausgleichsrohre (222), die parallel zur unterirdischen Wasserpumpe (103) angeordnet sind,
--- eine flügelförmige Struktur (223), die um oder zwischen dem Hilfs-Temperaturausgleichsrohr (222) und der unterirdischen Wasserpumpe (103) angeordnet ist, um Wärmeenergie zwischen der Wasserströmung in der unterirdischen Wasserpumpe (103) und dem Fluid im Hilfs-Temperaturausgleichsrohr (222) zu übertragen;
--- eine Flüssigkeitspumpe (123);
wobei das Temperaturausgleichsgerät **gekennzeichnet ist durch**
--- einen Fluideinlass (218) und ein Fluidrohr (221), die an einem Ende des Hilfs-Temperaturausgleichsrohrs (222) angebracht sind und in einen offenen Raum führen;
--- einen Fluidauslass (219) und ein Fluidrohr (231), die am anderen Ende des Hilfs-Temperaturausgleichsrohrs (222) angebracht sind und in einen offenen Raum führen, und
die Fluidrohre (221) und (231) entworfen sind, um einen offenen Fluidkreislauf zu bilden, so dass, angetrieben von der Pumpe (123), das Fluid **durch** das Hilfs-Temperaturausgleichsrohr (222) in das Rohr (221) und in den offenen Raum, dann zurück **durch** das Rohr (231) in das Hilfs-Temperaturausgleichsrohr (222) strömt.

2. Temperaturausgleichsgerät nach Anspruch 1, wobei das Fluidrohr (221) und das Fluidrohr (231) in einer/einem geschlossenen oder halbgeschlossenen Struktur oder Gebäude (110) angeordnet sind.

3. Temperaturausgleichsgerät nach Anspruch 1 oder 2, wobei ein Hilfs-Temperaturausgleichsrohr im Temperaturausgleichsgerät mit einem Wasserversorgungssystem der vorliegenden Erfindung eingeschlossen ist, um parallel angeordnet zu sein und eine gegenseitige Übertragung von Wärmeenergie mit dem ober- oder dem unterirdischen Wasserversorgungsrohr zu ermöglichen; wobei das Hilfs-Temperaturausgleichsrohr auch bereitgestellt ist, um zu ermöglichen, dass eine andere Art von Fluid in gasförmigem oder flüssigem Zustand durch das Rohr in den Gegenstand fließt, um indirekt die Temperaturausgleichsübertragung mit dem Gegenstand durch die Verwendung der Wärmeenergie durchzuführen, die von der Wasserströmung im Wasserversorgungsrohr des unterirdischen Wasserversorgungssystems getragen wird.

4. Temperaturausgleichsgerät nach einem der vorhergehenden Ansprüche, wobei der Gegenstand für den Temperaturausgleichsvorgang, durchgeführt vom Temperaturausgleichsgerät mit einem Wasserversorgungssystem der vorliegenden Erfindung, Folgendes umfasst:
(1) verschiedene Arten von offenem Raum; oder
(2) einen offenen Raum auf der Oberfläche der Erde; oder
(3) eine flache Schicht; oder
(4) einen Innenraum eines halbgeschlossenen; oder
(5) geschlossenen Gebäudes oder einen Innenraum einer anderen halbgeschlossenen oder geschlossenen Struktur.

5. Temperaturausgleichsgerät nach Anspruch 2, 3 oder 4, wobei der Innenraum des Gebäudes weiter betrieben werden kann, um Folgendes aufzunehmen:
(1) industrielle Anlagen, mechanische Anlagen, Maschinen und elektromechanische Anlagen, die eine spezifische Arbeitstemperatur erfordern; oder
(2) Kühlanlagen, Stromspeicheranlagen; oder
(3) Lagerung von festen, flüssigen oder gasförmigen Chemikalien;
bei der vorliegenden Erfindung kühlt die natürliche Wärmeenergie vom Wasserversorgungssystem entweder die Installationen oder Anlagen ab oder hält sie in einem bestimmten Temperaturbereich.

6. Temperaturausgleichsgerät nach einem der vorhergehenden Ansprüche, weiter umfassend eine Filtervorrichtung 124, die zum Fluideinlass und Auslass des Fluidrohrs 221 und eines anderen Fluidrohrs 231 angeordnet ist.

## Revendications

1. Appareil d'équilibrage de température pour transfert thermique avec un système d'alimentation en eau ayant un tuyau d'eau souterrain, comprenant :
- une tuyauterie d'équilibrage de température auxiliaire (222) disposée en parallèle au tuyau d'eau souterrain (103),
- une structure en forme d'aile (223) disposée autour ou entre la tuyauterie d'équilibrage de température auxiliaire (222) et le tuyau d'eau souterrain (103) pour la transmission d'énergie thermique entre le flux d'eau à l'intérieur du tuyau d'eau souterrain (103) et le fluide à l'intérieur de la tuyauterie d'équilibrage de température auxiliaire (222),
- une pompe à liquide (123), l'appareil d'équilibrage de température étant **caractérisé par** :
- une entrée de fluide (218) et une tuyauterie de fluide (221) disposées à une extrémité de la tuyauterie d'équilibrage de température auxiliaire (222), et conduisant à un espace ouvert ;
- une sortie de fluide (219) et une tuyauterie de fluide (231) disposées à l'autre extrémité de la tuyauterie d'équilibrage de température auxiliaire (222), et conduisant à l'espace ouvert ; et
la tuyauterie de fluide (221) et (231) sont agencées pour former un circuit de fluide ouvert, de telle sorte que, entraîné par la pompe (123), le fluide passe à travers la tuyauterie d'équilibrage de température auxiliaire (222) dans la tuyauterie (221) et dans l'espace ouvert, puis en retour à travers la tuyauterie (231) jusqu'à la tuyauterie d'équilibrage de température auxiliaire (222).

2. Appareil d'équilibrage de température selon la revendication 1, dans lequel la tuyauterie de fluide (221) et la tuyauterie de fluide (231) sont disposées à l'intérieur d'une structure ou construction fermée ou semi-fermée (110).

3. Appareil d'équilibrage de température selon l'une des revendications 1 ou 2, dans lequel une tuyauterie d'équilibrage de température auxiliaire est incluse dans l'appareil d'équilibrage de température avec un système d'alimentation en eau de la présente invention à disposer en parallèle et permettant une transmission mutuelle d'énergie thermique avec le sol ou la tuyauterie d'alimentation en eau souterraine ; la tuyauterie d'équilibrage de température auxiliaire étant disposée également pour permettre à un autre type de fluide à l'état liquide ou gazeux de passer à travers la tuyauterie vers le milieu pour réaliser indirectement la transmission d'équilibrage de température avec le milieu à l'aide de l'énergie thermique portée par le flux d'eau à l'intérieur de la tuyauterie d'alimentation en eau du système d'alimentation en eau souterrain.

4. Appareil d'équilibrage de température selon l'une quelconque des revendications précédentes, dans lequel le milieu pour l'opération d'équilibrage de température réalisée par l'appareil d'équilibrage de température avec un système d'alimentation en eau de la présente invention comprend :
(1) différents types d'espace ouvert ; ou
(2) un espace ouvert sur la surface de la terre ; ou
(3) une strate superficielle ; ou
(4) un espace intérieur d'une construction semi-fermée ou fermée ; ou
(5) un espace intérieur d'une autre structure fermée ou semi-fermée.

5. Appareil d'équilibrage de température selon l'une des revendications 2, 3 ou 4, dans lequel l'espace intérieur de la construction peut être en outre mis en oeuvre pour recevoir :
(1) des installations industrielles, des installations mécaniques, des machines motorisées et des installations électromécaniques qui demandent une température de travail spécifique ; ou
(2) des installations de refroidissement, des installations de stockage d'électricité ; ou
(3) un stockage de produits chimiques à l'état solide, liquide ou gazeux ;
Avec la présente invention l'énergie thermique naturelle provenant du système d'alimentation en eau soit refroidit, soit maintient les bâtiments et installations dans une certaine plage de température.

6. Appareil d'équilibrage de température selon l'une quelconque des revendications précédentes, comprenant en outre un dispositif de filtration 124 disposé à l'entrée et la sortie de fluide de la tuyauterie de fluide 221 et d'une autre tuyauterie de fluide 231.
